Europäisches Patentamt

European Patent Office

Office européen des brevets

(11) Publication number: **0 449 132 A2**

# EUROPEAN PATENT APPLICATION

(21) Application number: **91104526.8**

(51) Int. Cl.5: **B60R 22/30**

(22) Date of filing: **22.03.91**

(30) Priority: **28.03.90 IT 2091590**

(43) Date of publication of application:
**02.10.91 Bulletin 91/40**

(84) Designated Contracting States:
**AT BE CH DE DK ES FR GB GR LI LU NL SE**

(71) Applicant: **TRW SABELT S.p.A.**
**Via Giuseppe di Vittorio, 9**
**I-10024 Moncalieri (TO)(IT)**

(72) Inventor: **Lacconi, Sergio**
**Corso Cosenza, 58**
**I-10137 Torino(IT)**

(74) Representative: **Dr. Ing. A. Racheli & C.**
**Viale San Michele del Carso, 4**
**I-20144 Milano(IT)**

(54) **Pair of attachment devices with non-interchangeable elements for safety belts.**

(57) A pair of attachment devices (1, 101) with non-interchangeable elements, for safety belts, comprising a buckle (2, 102) and a corresponding tongue (3, 103), intented to be inserted in a seat (4, 104) of the buckle and locked there by a prong (5, 105), which engages with a slot (6, 106) made on the tongue (3, 103), in which the profiles of the seats (4, 104) and of the tongues (3, 103) are shaped in such a way as to prevent connection between an element (2, 3) of the attachment device (1) and an element (103, 102) of the other attachment device.

FIG. 3

FIG. 4

EP 0 449 132 A2

The present invention relates to a pair of attachment devices with non-interchangeable elements for safety belts, such as to prevent the attachment tongue of the one being able to be coupled with the buckle of the other and viceversa.

An attachment device for safety belts comprises a buckle and an attachment key or tongue, capable of being inserted in the buckle and self-locking in it, usually by means of the engagement between a slot made in the tongue and a prong foreseen on the inside of the buckle.

Releasing of the attachment system is carried out automatically by pressing a button foreseen on the buckle.

With seats with more than two places in line, as for example rear seats in cars, which foresee three places and therefore the same number of safety belts, there is the risk that during use a tongue of a side belt will be coupled with the buckle of the centre one or viceversa.

Connection errors of this type are very dangerous since they threaten the efficiency of the belts and thence the safety of the user in the event of sudden breaking.

To eliminate the risk of connection errors, as required by the regulations of several countries, solutions have been proposed which foresee complete diversification of the attachment device of the centre belts with respect to that of the side belts.

This substantial modification of the attachment device causes a large increase in costs, as it is necessary to provide differentiated production lines.

The aim of the invention is to provide a pair of attachment devices with non-interchangeable elements for safety belts, which differ only marginally from each other, in such a way that they can be produced at low cost.

According to the invention, one of the attachment devices comprises a buckle with a seat widening towards the opening, to allow the insertion of the corresponding attachment tongue, which broadens at the base, while the other attachment device has a buckle with a seat which is wider and does not broaden out at the opening, intended for receiving an attachment tongue which has two lengths of different width, in such a way as to form a step in the passage from one to the other.

In this way, the tongue of the first attachment device cannot be connected to the buckle of the second, since the widening at its base prevents it from being inserted completely into the seat of the buckle, and therefore does not cause the engagement between the prong of the buckle and the slot made on the tongue. Viceversa, the tongue of the second attachment device cannot be inserted into the buckle of the first, which is not as wide, since the steps made on the tongue interfere with the rims of the entrance to the housing.

Such a solution, therefore, foresees only slight differences between the tongues and the buckles of the two devices.

In particular, the "hearts" of the buckles, comprising the coupling and release mechanisms, are identical, just as the outer casings of the buckles could be identical, and it is enough to vary only the width of the sliding and housing seats of the tongues, which can be done in the final phase of the buckle production line.

To avoid the buckles of the pair of safety belt attachment devices according to the invention being confused with each other, identification in writing or markings can be printed on them.

The invetion will now be described in greater detail with reference to one of its purely exemplary and therefore not restrictive embodiments, illustrated in the appended drawings, in which:

Figures 1 and 2
are diagrammatic perspective views of the two attachment devices with non-interchangeable elements for safety belts, according to the invention, before coupling;

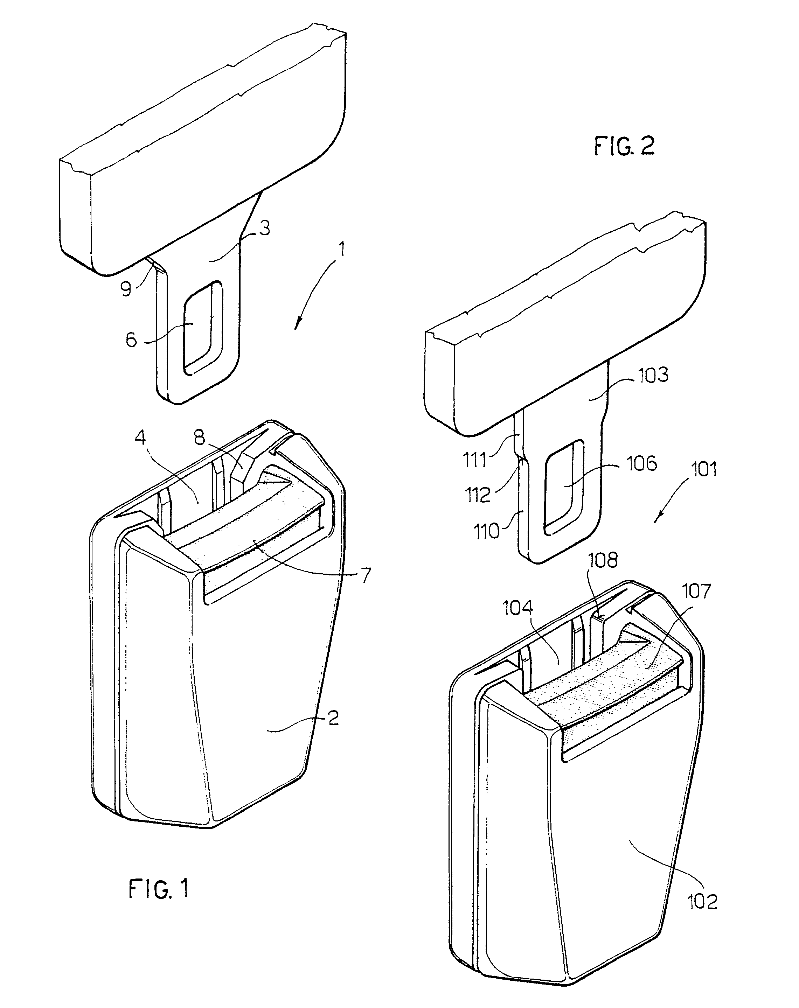

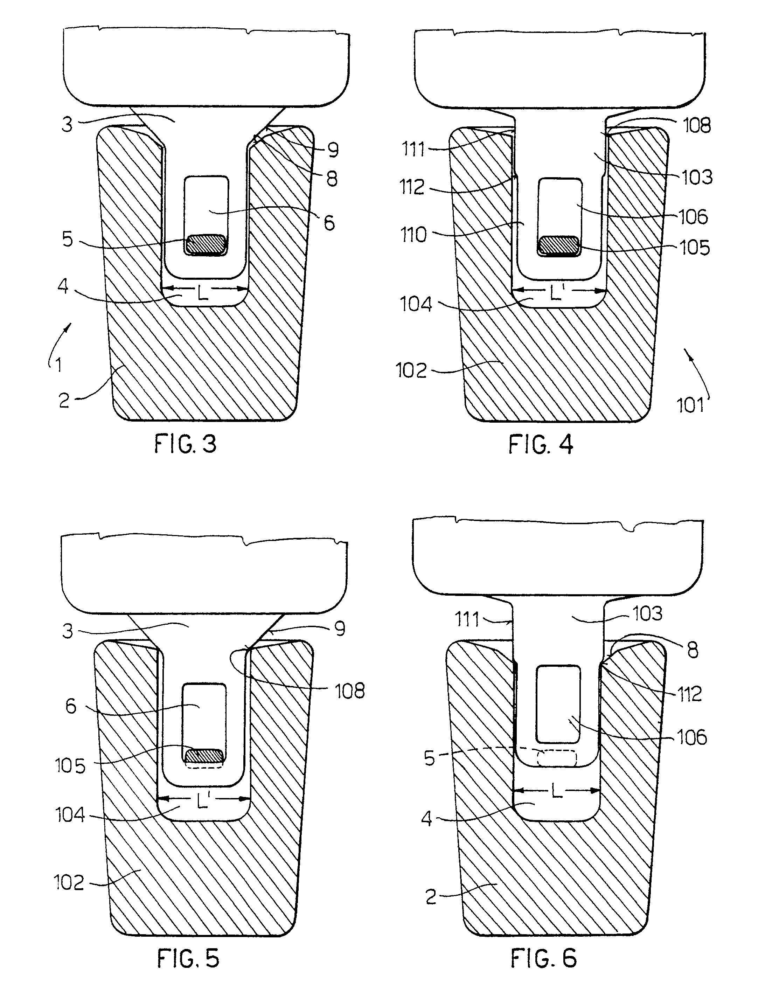

Figures 3 and 4
are diagrammatic sectional views of the attachment devices in figures 1 and 2 respectively, in the coupled position;

Figures 5 and 6
are a diagrammic illustration of the non-interchangeability of the elements of the two attachment devices according to the invention.

In figures 1 and 3 one of the two attachment devices according to the invention is illustrated, shown as a whole with reference number 1, comprising a buckle 2 and a tongue 3.

Inside the buckle 2 a mechanism is located, which is already known, for locking the tongue 3 automatically when the latter is fully inserted into a corresponding seat 4 of the buckle, by means of the engagement of a prong 5, foreseen inside the buckle, with a slot 6 made on the tongue (figure 3), and also for releasing the tongue 3 automatically from the buckle 2, by pressing a button 7 foreseen on the latter.

The seat 4 made on the buckle 1 has a flared opening 8, intended to receive a corresponding widening 9 foreseen in correspondence with the base of the tongue 3, in such a way that the tongue can be inserted far enough into the seat 4 to cause the prong 5 to snap into the slot 6 (figure 3).

The second attachment device according to the invention is shown in figures 2 and 4, where the same reference numbers are used as those in the illustrations of figures 1 and 3, increased by a hundred, to show the same or similar parts.

In this case, the seat 104 for the tongue 103 has a width L' which is slightly greater than the width L of the seat 4 of the buckle 2, and has no bevelling in correspondence with the opening 108.

Correspondingly, the tongue 103 has two consecutive lengths 110, 111 of different widths, beginning from the point, such as to form a step 112 in the passage from one to the other. In particular, the length 111 nearer the base of the tongue 103 has a greater width than the width L of the seat 4 of the buckle 2.

In such a way, the tongue 3 of the first attachment device 1 cannot be fully inserted into the buckle 102 of the second attachment device 101, because the widened part 9 at the base of the tongue 3 interferes with the opening 108 of the seat 104, thus preventing the prong 105 from snapping into the slot 6, as shown in figure 5.

Similarly, the tongue 103 in the attachment device 101 cannot be fully inserted into the buckle 2 of the first attachment device 1, since the length 111 of the tongue 103, being wider than the width L of the seat 4 of the buckle, interferes at the level of its insertion step 112 with the opening 8 of the seat 4, as shown in figure 6.

From what has been explained above it can be clearly seen how any possibility of error in connection between the tongue of one of the two device with the buckle of the other is prevented, without the elements of such devices being subjected to substantial modifications, as it is sufficient just to make a slight modification to the other profile of the tongues 3 and 103 and of the corresponding seats 4 and 104.

Of course, the invention is not limited to the particular embodiment previously described and illustrated in the appended drawings, but modifications may be made to its details, which are within the capabilities of a technician in the art.

**Claims**

1. A pair of attachment devices (1, 101) with non-interchangeable elements for safety belts, comprising a buckle (2, 102) and a corresponding tongue (3, 103) intended to be housed in a seat (4, 104) of the buckle, where it is locked by a prong (5, 105), which engages with a slot (6, 106) made on the tongue, characterized in that the seat (4) of the buckle (2) of the first attachment device (1) is of a width (L) and has a bevelled opening (8) suitable to receive a widening (9) foreseen in correspondence with the base of the tongue (3), while the seat (104) of the buckle (102) of the second attachment device (101) has a width (L') greater than (L) with an opening (108) without bevelling, and the corresponding tongue (103) has at least one length (111) whose width is larger than (L) and smaller than (L'), the result of all of which being that each tongue (3, 103) can be inserted fully into the corresponding seat (4, 104), to cause the prongs (5, 105) to snap into the slots (6, 106), while possible wrong connections of the tongues (3, 103) with the buckles (2, 102) are prevented respectively by the interference of the widening (9) of the tongue (3) with the opening (108) of the seat (104) of the buckle (102), and of the length (111) of the tongue (103), whose width is greater than (L), with the opening (8) of the seat (4) of the buckle (2).

2. A pair of attachment devices according to claim 1, characterized in that the tongue (103) of the second attachment device (101) has two consecutive lengths (110, 111) of different widths, in such a way that a step (112) is formed between them.

FIG. 2

FIG. 1

FIG. 3

FIG. 4

FIG. 5

FIG. 6